# EUROPÄISCHE PATENTANMELDUNG

(11) **EP 2 835 500 A1**
(43) Veröffentlichungstag der Anmeldung: **11.02.2015**
(21) Anmeldenummer: 13179892.8
(22) Anmeldetag: 09.08.2013
(51) Int. Cl.: F01D 5/14, F01D 11/08, F01D 11/14, F01D 25/28

(54) **Einsatzelement und Gasturbine**

(71) Anmelder: Siemens Aktiengesellschaft, 80333 München (DE)
(72) Erfinder: Ahmad, Fathi, 41564 Kaarst (DE); Händler, Michael, 40699 Erkrath (DE); Kampka, Kevin, 45478 Mülheim a. d. Ruhr (DE); Kowalski, Christian, 46147 Oberhausen (DE); Kowalzik, Christian, 45276 Essen (DE); Kurt, Nihal, 40231 Düsseldorf (DE); Schmitt, Stefan, 45481 Mülheim an der Ruhr (DE); Schröder, Peter, 45307 Essen (DE)

(57) **Zusammenfassung**

Die Erfindung betrifft ein Einsatzelement (14) zur Befestigung an einem Ringsegment (13) einer Turbine (11) einer Gasturbine (10). Das Ringsegment (13) ist dabei für einen Betrieb mit einer ein Deckband aufweisenden Laufschaufelreihe ausgebildet. Das Einsatzelement (14) weist eine Abdeckplatte (29) mit einer konkav geformten Vorderseite (15) und einer Rückseite (16) auf. Das Einsatzelement (14) umfasst zudem zumindest einen an der Rückseite (16) der Abdeckplatte (29) angeordneten Fuß (17) zur Positionierung an dem Ringsegment (13). Ferner wird eine Gasturbine (10) mit dem Einsatzelement (14) beansprucht.

## Beschreibung

Die vorliegende Erfindung betrifft ein Einsatzelement zur Befestigung an einem Ringsegment einer Turbine einer Gasturbine, welches für einen Betrieb mit einer ein Deckband aufweisenden Laufschaufelreihe ausgebildet ist. Zudem betrifft die vorliegende Erfindung eine Gasturbine.

Es ist bekannt und weit verbreitet, dass Laufschaufelreihen von Turbinen von Gasturbinen am oberen Ende der Schaufelblätter ein sogenanntes Deckband aufweisen.

Durch das Deckband ist es bei Eingriffen an der Laufschaufelreihe, die beispielsweise zu Instandhaltungs- oder Erprobungszwecken erfolgen, notwendig, ein sogenanntes Cover-Lift, also ein Abheben des kompletten oberen Gehäuseteils, vorzunehmen, um Ringsegmente, die um die Laufschaufel herum angeordnet sind, auszutauschen. Ein Cover-Lift ist mit großem Aufwand verbunden.

Der vorliegenden Erfindung liegt die Aufgabe zugrunde, diese Nachteile zu beheben und ein Einsatzelement bereitzustellen, mit dem es möglich ist, eine Laufschaufelreihe ohne Deckband in der Gasturbine zu betreiben.

Gelöst wird diese Aufgabe mit einem Einsatzelement nach Anspruch 1 sowie einer Gasturbine nach Anspruch 9. Vorteilhafte Weiterbildungen der Erfindung sind in den Unteransprüchen angegeben und in der Beschreibung beschrieben.

Das erfindungsgemäße Einsatzelement zur Befestigung an einem Ringsegment einer Turbine einer Gasturbine weist eine Abdeckplatte mit einer konkav geformten Vorderseite und einer Rückseite auf. Das Einsatzelement umfasst zudem zumindest einen an der Rückseite der Abdeckplatte angeordneten Fuß zur Positionierung an dem Ringsegment. Das Ringsegment ist dabei für einen Betrieb mit einer ein Deckband aufweisenden Laufschaufelreihe ausgebildet.

Mit dieser Anordnung ist es vorteilhaft ermöglicht eine Gasturbine von einem Betrieb mit einer Laufschaufelreihe mit Deckband auf einen Betrieb mit einer Laufschaufelreihe ohne Deckband umzurüsten ohne dafür neue Ringsegmente einsetzen zu müssen. Ein aufwendiger Cover-Lift bleibt dadurch erspart. Auch eine aufwendige Neuanfertigung passender Ringsegmente kann erspart bleiben.

In einer vorteilhaften Ausgestaltung des erfindungsgemäßen Einsatzelements weist die Abdeckplatte an einer Unterseite zumindest eine Ausformung zum Einschub in einen Hinterschnitt des Ringsegments auf.

Die Ausformung dient einer einfacheren, schnelleren und genaueren Positionierung des Einsatzelements vor einem befestigen des Einsatzelements an dem Ringsegment. Die Montage ist dadurch vereinfacht und mit weniger Aufwand möglich.

In einer weiteren vorteilhaften Ausgestaltung des erfindungsgemäßen Einsatzelements weist die Abdeckplatte zumindest einen von der Vorderseite zur Rückseite verlaufenden Kanal auf.

Damit kann das Einsatzelement mit entsprechenden Schrauben oder Bolzen in einfacher Weise an dem Ringsegment befestigt werden.

In einer weiteren vorteilhaften Ausgestaltung des erfindungsgemäßen Einsatzelements ist das Einsatzelement einstückig ausgebildet.

Die Anzahl der Einzelteile ist dadurch verringert. Das erleichtert die Handhabung und spart logistischen Aufwand.

In einer alternativen Ausgestaltung des erfindungsgemäßen Einsatzelements ist das Einsatzelement mehrstückig ausgebildet und die Abdeckplatte ist mit dem zumindest einen Fuß verbindbar.

Dadurch kann zuerst der zumindest eine Fuß des Einsatzelements an dem Ringsegment und anschließend die Abdeckplatte des Einsatzelements an dem zumindest einen Fuß befestigt werden.

In einer weiteren vorteilhaften Ausgestaltung des erfindungsgemäßen Einsatzelements weist die Abdeckplatte zumindest eine Aufnahmenut und der Fuß eine Schiene mit einer zur Aufnahmenut korrespondierenden Form auf.

Damit können der zumindest eine Fuß und die Abdeckplatte werkzeuglos fest miteinander verbunden werden.

In einer weiteren vorteilhaften Ausgestaltung des erfindungsgemäßen Einsatzelements umfasst das Einsatzelement mehrere Füße und die Füße sind durch eine Fußplatte miteinander verbunden.

Die Füße sind dadurch zueinander unveränderbar positioniert. Bei der Montage an das Ringsegment können die Füße schnell angeordnet werden. Die Montage des Einsatzelements an dem Ringsegment ist damit vereinfacht.

In einer weiteren vorteilhaften Ausgestaltung des erfindungsgemäßen Einsatzelements weist die Fußplatte zumindest einen die Fußplatte durchbohrenden Kanal auf.

Damit sind die Füße in einfacher Weise mittels Befestigungsmitteln, insbesondere mit Bolzen oder Schrauben an dem Ringsegment befestigbar.

Das erfindungsgemäße Einsatzelement ist bevorzugt in eine Gasturbine integriert. Die erfindungsgemäße Gasturbine umfasst eine Turbine mit einer Laufschaufelreihe und einem um die Laufschaufelreihe herum angeordneten Ring aus mehreren Ringsegmenten. Die Ringsegmente sind für einen Betrieb mit einer ein Deckband aufweisenden Laufschaufelreihe ausgebildet. Das zumindest eine Einsatzelement ist an einem der Ringsegmente befestigt.

Damit ist vorteilhaft eine Gasturbine bereitgestellt, die für einen Betrieb mit einer Laufschaufelreihe ohne Deckband geeignet ist. Bei einem Austausch der Laufschaufeln braucht nicht das obere Gehäuse der Gasturbine abgehoben zu werden (Cover-Lift). Ein Zugang von der Auslassseite her genügt. Die erfindungsgemäße Gasturbine eignet sich damit insbesondere für Versuchszwecke, bei denen häufiger Änderungen an den Schaufelblättern vorgenommen werden. Mit der vorliegenden Gasturbine könne diese Versuche erheblich schneller aufgebaut und durchgeführt werden.

Zudem kann die erfindungsgemäße Gasturbine in einfacher Weise für den Betrieb mit einer Laufschaufelreihe mit Deckband umgerüstet werden, indem das zumindest eine Einsatzelement vom Ringsegment entfernt wird.

Ausführungsbeispiele der Erfindung werden anhand der Zeichnungen und der nachfolgenden Beschreibung näher erläutert. Es zeigen:
- Figur 1: eine erfindungsgemäße Gasturbine,
- Figur 2: eine Detailansicht der Gasturbine,
- Figur 3: ein erfindungsgemäßes Einsatzelement und
- Figur 4: einen Fuß des erfindungsgemäßen Einsatzelements.

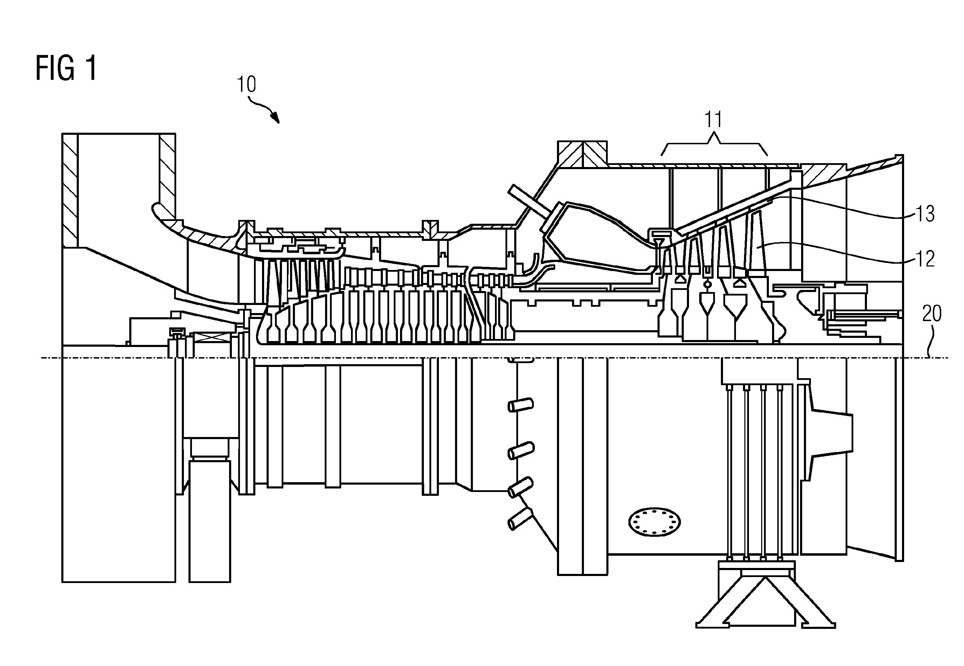

In der Figur 1 ist eine erfindungsgemäße Gasturbine 10 in einer beispielhaften Ausgestaltung skizziert. Die Gasturbine 10 umfasst erfindungsgemäß eine Turbine 11 in der wenigstens eine Laufschaufelreihe 12 angeordnet ist. Um diese Laufschaufelreihe 12 herum ist erfindungsgemäß ein Ring aus mehreren Ringsegmenten 13 angeordnet. Die Laufschaufelreihe 12 ist um eine Rotationsachse 20 drehbar angeordnet.

Bei der Laufschaufelreihe 12 handelt es sich insbesondere um die stromabwärts der anderen Laufschaufelreihen gelegene. In der Figur 1 ist die entsprechende Laufschaufelreihe 12 die vierte Laufschaufelreihe der Turbine 11 der Gasturbine 10.

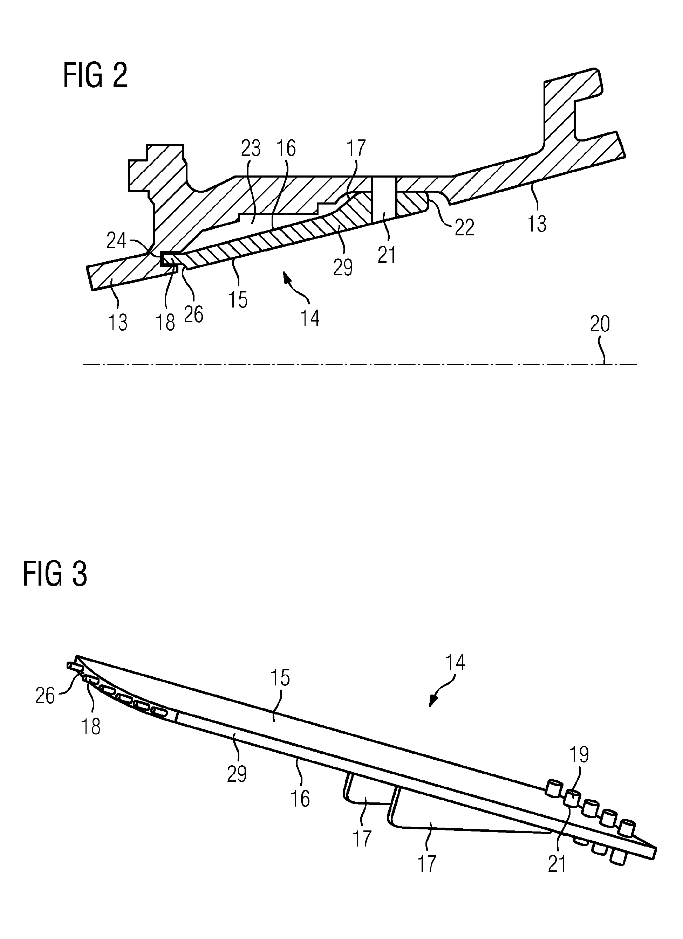

Die erfindungsgemäße Gasturbine 10 weist wenigstens ein an einem der Ringsegmente 13 befestigtes Einsatzelement 14 auf. In der Figur 2 ist die Anordnung des Einsatzelements 14 in dem Ringsegment 13 in einer beispielhaften Ausgestaltung in einer Schnittdarstellung skizziert.

Das Einsatzelement 14 deckt eine Aussparung 23 in dem Ringsegment 13 ab. Diese Aussparung 23 besitzt das Ringsegment 13 für den Betrieb der Gasturbine 10 mit einer Laufschaufelreihe, die ein Deckband aufweist. Um beispielsweise in einer Erprobungsphase nicht die gesamte obere Gehäusehälfte der Gasturbine abnehmen zu müssen (Cover-Lift) ist es vorteilhaft, die Laufschaufelreihe 12 ohne Deckband zu verwenden. Mittels des erfindungsgemäßen Einsatzelements 14 kann das Ringsegment 13 an die Laufschaufelreihe 12, die kein Deckband aufweist, angepasst werden.

Das in der Figur 3 in einer Einzelansicht gezeigte Einsatzelement 14 umfasst erfindungsgemäß eine Abdeckplatte 29 mit einer Rückseite 16 und mit einer konkav geformten Vorderseite 15. An der Rückseite 16 der Abdeckplatte 29 weist das erfindungsgemäße Einsatzelement 14 zumindest einen Fuß 17 zur Positionierung an dem Ringsegment 13 auf.

In der gezeigten Ausgestaltung umfasst das Einsatzelement 14 zwei Füße 17. Zudem umfasst das gezeigte Einsatzelement 14 an einer Unterseite 26 mehrere Ausformungen 18. Mit den Ausformungen 18 an der Unterseite 26 kann das Einsatzelement 14 in einen Hinterschnitt 24 des Ringsegments 13 geschoben werden. Mit dem zumindest einen Fuß 17 ist das Einsatzelement 14 in seiner Montageposition positioniert. Das in der Figur 3 gezeigte Einsatzelement 14 weist fünf von der Vorderseite 15 zur Rückseite 16 verlaufende Kanäle 21 auf. Die Kanäle 21 dienen der Befestigung des Einsatzelements 14 mit dem Ringsegment 13. Mittel zum Befestigen des Einsatzelements 14 werden dabei durch die Kanäle 21 geführt. In der Figur 3 sind entsprechend der Anzahl der Kanäle 21 fünf Bolzen 19 als Befestigungsmittel dargestellt. Die Bolzen 19 sind insbesondere Gewindebolzen oder Schrauben. Das Einsatzelement 14 ist in montiertem Zustand fest mit dem Ringsegment 13 verbunden. Das Einsatzelement 14 schließt im montierten Zustand bevorzugt bündig mit dem Ringsegment 13 ab.

Die Vorderseite 15 der Abdeckplatte 29 des erfindungsgemäßen Einsatzelements 14 ist konkav ausgeführt und damit den um die Laufschaufelreihe 12 herum angeordneten Ringsegmenten 13 angepasst. Im montierten Zustand ist die konkave Krümmung der Vorderseite 15 quer zur Rotationsachse 20 ausgebildet.

Das Einsatzelement 14 kann je Kanal 21 eine koaxial zum Kanal 21 angeordnete Senkung aufweisen. Das Befestigungsmittel zur Befestigung des Einsatzelements 14, insbesondere der Kopf einer Schraube, kann in der Senkung angeordnet sein um nicht aus der Kontur des Eisatzelements 14 herauszustehen.

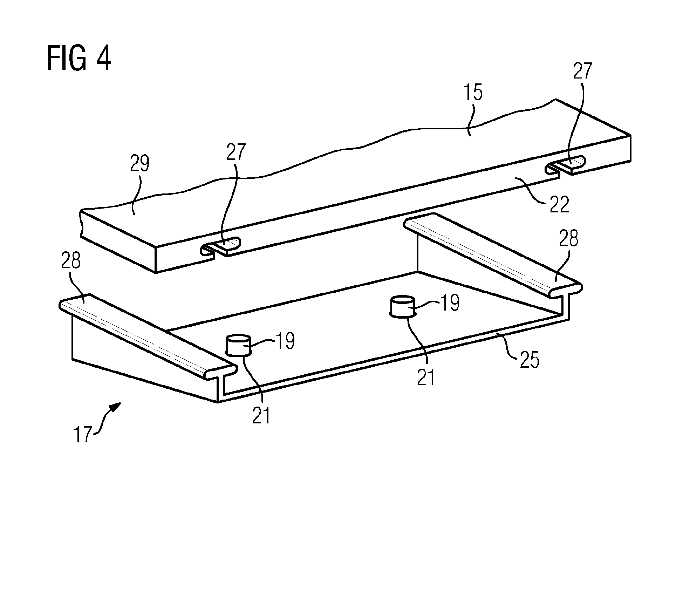

Das erfindungsgemäße Einsatzelement 14 kann einstückig ausgeführt sein. Der zumindest eine Fuß 17 ist dann monolithisch mit der Abdeckplatte 29 ausgebildet. Das erfindungsgemäße Einsatzelement 14 kann alternativ dazu auch mehrstückig ausgebildet sein. Die Abdeckplatte 29 ist dann mit dem zumindest einen Fuß 17 verbindbar, insbesondere auf den zumindest einen Fuß 17 aufschiebbar. In der Figur 4 ist eine derartige Ausgestaltung des erfindungsgemäßen Einsatzelements 14 skizziert.

In der gezeigten Ausgestaltung verfügt das Einsatzelement 14 über zwei Füße 17, die mittels einer Fußplatte 25 miteinander verbunden sind. Die Fußplatte 25 weist in der gezeigten Ausführung zwei Kanäle 21 auf. Durch diese Kanäle 21 hindurch können Befestigungsmittel zur Befestigung der Fußplatte 25 an dem Ringsegment 13 geführt werden. In der Figur 4 sind Bolzen 19 als Befestigungsmittel dargestellt. Das mehrteilig ausgestaltete Einsatzelement 14 bietet die Möglichkeit zuerst den zumindest einen Fuß 17 an dem Ringsegment zu befestigen und anschließend die Abdeckplatte 29 an dem Fuß 17 zu befestigen. Insbesondere können die Abdeckplatte 29 und der zumindest eine Fuß 17 in der Weise ausgeführt sein, dass die Abdeckplatte 29 auf den zumindest einen Fuß 17 aufschiebbar ist. In der in Figur 4 gezeigten Ausgestaltung weisen die beiden Füße 17 dazu jeweils eine Schiene 28 auf und die Abdeckplatte 29 umfasst zwei Aufnahmenuten 27. Die Aufnahmenuten 27 sind von einer Oberseite 22 her zugänglich. Die Schienen 28 und die Aufnahmenuten 27 weisen jeweils korrespondierende Formen auf. Nach dem Aufschieben der Abdeckplatte 29 auf den zumindest einen Fuß 17 ist die Schiene 28 in der Aufnahmenut 27 angeordnet, wodurch die Abdeckplatte 29 an dem zumindest einen Fuß 17 befestigt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einsatzelement (14) zur Befestigung an einem Ringsegment (13) einer Turbine (11) einer Gasturbine (10), welches für einen Betrieb mit einer ein Deckband aufweisenden Laufschaufelreihe ausgebildet ist,
wobei das Einsatzelement (14) eine Abdeckplatte (29) mit einer konkav geformten Vorderseite (15) und einer Rückseite (16) sowie zumindest einen an der Rückseite (16) angeordneten Fuß (17) zur Positionierung an dem Ringsegment (13) aufweist.

2. Einsatzelement (14) nach Anspruch 1,
wobei die Abdeckplatte (29) an einer Unterseite (26) zumindest eine Ausformung (18) zum Einschub in einen Hinterschnitt (24) des Ringsegments (13) aufweist.

3. Einsatzelement (14) nach Anspruch 1 oder 2,
wobei die Abdeckplatte (29) zumindest einen von der Vorderseite (15) zur Rückseite (16) verlaufenden Kanal (21) aufweist.

4. Einsatzelement (14) nach einem der Ansprüche 1 bis 3, wobei das Einsatzelement (14) einstückig ausgebildet ist.

5. Einsatzelement (14) nach einem der Ansprüche 1 bis 3, wobei das Einsatzelement (14) mehrstückig ausgebildet und die Abdeckplatte (29) mit dem zumindest einen Fuß (17) verbindbar ist.

6. Einsatzelement (14) nach Anspruch 5,
wobei die Abdeckplatte (29) zumindest eine Aufnahmenut (27) und der Fuß (17) eine Schiene (28) mit einer zur Aufnahmenut (27) korrespondierenden Form aufweist.

7. Einsatzelement (14) nach Anspruch 5 oder 6,
wobei das Einsatzelement (14) mehrere Füße (17) umfasst und die Füße (17) durch eine Fußplatte (25) miteinander verbunden sind.

8. Einsatzelement (14) nach Anspruch 7,
wobei die Fußplatte (25) zumindest einen die Fußplatte (25) durchbohrenden Kanal (21) aufweist.

9. Gasturbine (10) mit einer eine Laufschaufelreihe (12) und einen um die Laufschaufelreihe (12) herum angeordneten aus mehreren Ringsegmenten (13) aufgebauten Ring aufweisenden Turbine (11),
wobei die Ringsegmente (13) für einen Betrieb mit einer ein Deckband aufweisenden Laufschaufelreihe ausgebildet sind, wobei die Gasturbine (10) zumindest ein an einem der Ringsegmente (13) befestigtes Einsatzelement (14) nach einem der Ansprüche 1 bis 8 aufweist.
